Europäisches Patentamt

European Patent Office

Office européen des brevets

(11) Publication number: **0 225 775 B1**

# EUROPEAN PATENT SPECIFICATION

(45) Date of publication of patent specification: **02.05.90**

(51) Int. Cl.⁵: **B 65 G 65/48,** B 65 G 53/46

(21) Application number: **86309354.8**

(22) Date of filing: **01.12.86**

(54) **A rotary valve arrangement.**

(30) Priority: **05.12.85 GB 8529955**

(43) Date of publication of application:
**16.06.87 Bulletin 87/25**

(45) Publication of the grant of the patent:
**02.05.90 Bulletin 90/18**

(84) Designated Contracting States:
**DE FR NL**

(56) References cited:
**EP-A-0 010 700**
**EP-A-0 066 476**
**DE-U-1 692 958**
**DE-U-6 935 628**
**DE-U-7 132 032**
**GB-A- 817 328**
**US-A-3 118 575**

(73) Proprietor: **WESTINGHOUSE BRAKE AND SIGNAL HOLDINGS LIMITED**
**Pew Hill**
**Chippenham Wiltshire (GB)**

(72) Inventor: **Bye, Leonard James**
**3 Sadlers Mead**
**Chippenham Wiltshire SN15 3PA (GB)**

(74) Representative: **Newstead, Michael John et al**
**Page & Co. Temple Gate House Temple Gate**
**Bristol BS1 6PL (GB)**

Courier Press, Leamington Spa, England.

## Description

The present invention relates to a rotary valve arrangement comprising a rotary valve for handling granular or particulate material, such as coal, sand, grain or feedstuff or plastics material in pellet form.

A rotary valve arrangement having the precharacterising features of claim 1 is disclosed in US—A—3 118 575.

According to the present invention, there is provided a rotary valve arrangement comprising a rotary valve for handling granular or particulate material, the rotary valve comprising a plurality of rotatable vanes, to which valve such material is fed from above in use of the valve, and an inlet arrangement for the rotary valve, the inlet arrangement comprising: resilient means disposed with at least a majority of it above the vanes in use of the arrangement for at least partially removing such material from the tips of the vanes, characterised in that said inlet arrangement comprises further resilient means downstream of the first resilient means in the direction of rotation of the vanes in use of the arrangement for substantially removing any such material which remains on the tips of the vanes or has been deflected off the vanes away from the latter, said further resilient means comprising an elongate member whose axis is parallel to the axis of rotation of said vanes, a plate running lengthwise of and attached to said elongate member and spring means, said elongate member being resiliently mounted about its axis via said spring means.

The present invention will now be described, by way of example, with reference to the accompanying drawings, in which:

Fig. 1 is a vertical section through an example of a rotary valve arrangement according to the present invention;

Fig. 2(a) shows how first resilient means in the arrangement are provided and mounted, Fig. 2(b) being an enlarged view of part of Fig. 2(a) and these Figures being sectional views taken at right-angles to Fig. 1;

Fig. 3 shows the appearance of an inlet opening of the arrangement when viewed in the direction of arrow A in Fig. 1;

Fig. 4 shows the appearance of an outlet opening of the arrangement when viewed in the direction of arrow B in Fig. 1; and

Fig. 5 is another sectional view taken at right-angles to Fig. 1 showing part of the arrangement.

Referring to the drawings, a rotary valve arrangement comprises at the top a structure 1 defining a circular (or rectangular) opening 2 into which is fed granular material from a hopper (not shown) in use of the arrangement. Structure 1 is attached to a body 3 including a rotary valve 4, the opening 2 communicating with an inlet opening 5 in the body 3. A flat member 6 defines, together with a hinged plate 7, a throat in the opening 5, through which such material passes to the rotary valve 4, the latter feeding such material for further handling via an outlet opening 8 at the bottom of the arrangement. The throat is adjusted by adjusting the position of plate 7 by means of an adjusting bolt 9 bearing against plate 7.

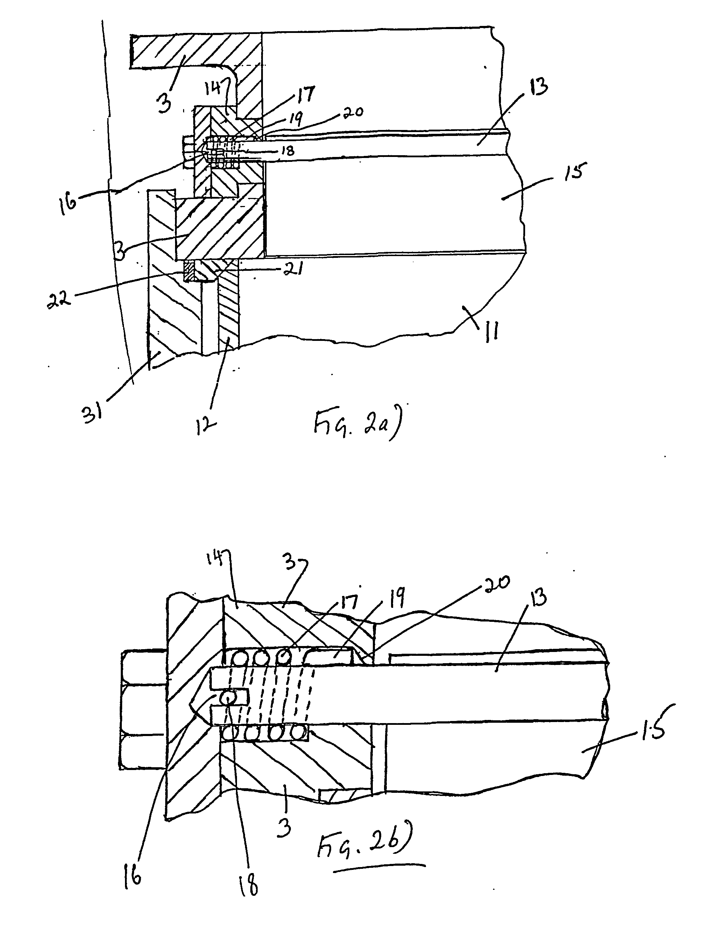

The rotary valve 4 comprises an axle 10 carrying a plurality of vanes 11 which rotate with the axle 10 and end discs 12 (only one being shown——see Fig. 2(a)) at opposite ends of the axle 10, which discs close the ends of the pockets between the vanes 11.

Above the rotary valve 4 there is a rod 13 whose opposite ends pass through and are held in members 14, which members are themselves held in opposite walls of the body 3, only one of members 14 being shown. The rod 13 is rotatable about its longitudinal axis and carries a plate 15 running lengthwise of the rod 13 across the top of the rotary valve 4, the plate 15 being held on to rod 13 by crimping and/or spot-welding. Referring more particularly to Figs. 2(a) and 2(b), at each end rod 13 has a notch 16 across its end face, only one end being shown. Around each end of rod 13 is a respective coil spring 17 (only one being shown), having a transverse leg 18 at one end of the spring and received in the respective notch 16; and a longitudinal leg 19 at the opposite end of the spring and bearing against an abutment surface 20 in the respective member 14 provided by the shape of the opening in the latter which receives the end of the rod 13 and the spring 17. As a result of members 14 and springs 17, rod 13 and plate 15 are mounted in a resilient manner. In Fig. 2(a), reference numeral 21 denotes a sealing ring of low-friction sealing material such as poly-tetrafluorethylene having a chamfered edge which is urged against a correspondingly chamfered edge of end disc 12 and the body 3 by a resilient ring 22, for example of rubber. The other disc 12 (not shown) also has rings corresponding to rings 21 and 22, the function of the latter being to substantially avoid air which travels up the spaces between body 3 and discs 12 disturbing material in pockets between adjacent vanes 11. Reference numeral 31 denotes an end cover attached to the body 3.

Downstream of the rod 13 and plate 15 in the direction of rotation of the vanes 7 is a further rod 23 whose opposite ends also pass through and are held in members 14. The rod 23 is also rotatable about its longitudinal axis and carries a plate 24 running lengthwise of the rod 23 across the top of the rotary valve 4, the plate 24 being held on to rod 23 by crimping and/or spot-welding. Rod 23 is held in members 14 in an identical manner to rod 13, being notched at opposite ends and having a respective coil spring around each of these ends which is held in the respective member 14, in an identical manner to rod 13. Thereby, rod 23 and plate 24 are also mounted in a resilient manner via members 14 and associated springs 17.

In use of the arrangement, granular or particulate material feeds under gravity from the hopper through the opening 2 and via the throat in opening 5 into the pockets formed between adjacent vanes 11, and rotation of the latter dispenses material for further handling via opening 8. Such material which happens to remain on the tip of one of the vanes 11 as that vane approaches the plate 15 will be swept away from the vane by the plate 15, either into the preceding pocket or back into the pile of material in the throat, the plate 15 returning to its original position after any deflection as a result of impingement against such material, by virtue of the resilient biasing provided by springs 17. Similarly, any such material which happens to remain on a vane 11, or which is deflected away, for example tangentially, from the rotary valve from a vane 11, is returned to a pocket between vanes 11 by virtue of plate 24, which also returns to its original position as a result of any deflection, by virtue of the resilient biasing provided by the springs of its rod 23.

As a result of the operation of plates 15 and 24, jamming of the vanes 11 against the internal wall of the body 3 as a result of material remaining on the tips of the vanes 11 is substantially prevented and, by virtue of the fact that the plates 15 and 24 are resiliently biased, jamming of the vanes 11 against these plates themselves as a result of material remaining on the tips of the vanes 11 is also substantially prevented.

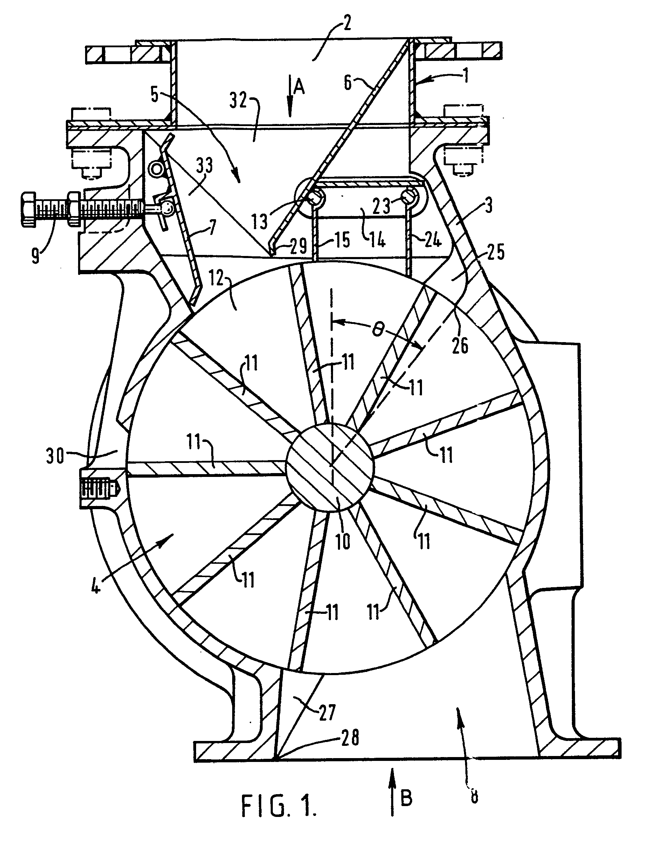

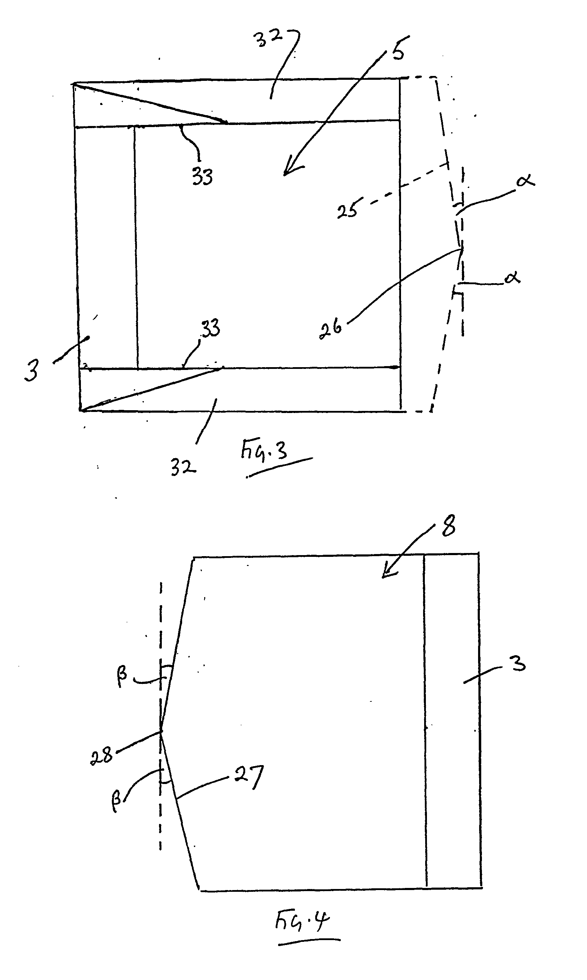

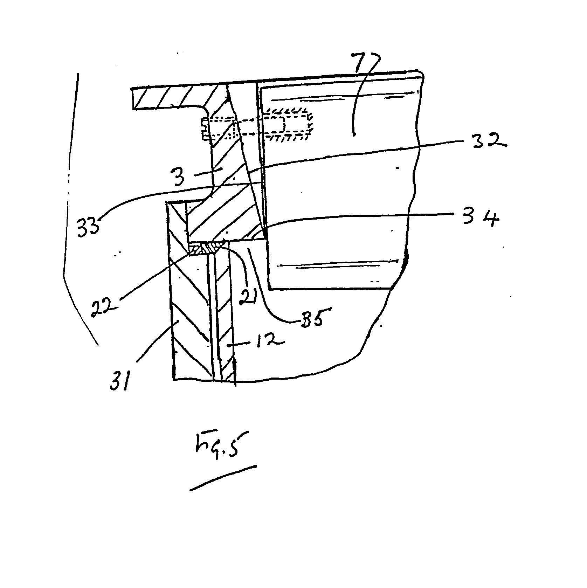

Fig. 3 shows the appearance of the opening 5 when viewed in the direction of arrow A in Fig. 1 and Fig. 4 shows the appearance of the opening 8 when viewed in the direction of arrow B in Fig. 1. The right-hand side 25 in Fig. 1 of the opening 5 immediately adjacent the rotary valve 4 is shaped so that its halves are convergent outwards towards its centre 26 at an angle α to a direction parallel to the axis of axle 10; and the left-hand side 27 in Fig. 1 of the opening 8 immediately adjacent the rotary valve 4 is shaped so that its halves are convergent outwards towards its centre 28 at an angle β to a direction parallel to the axis of axle 10. Each of angles α and β is at least 10°.

If there does happen to be material on the tip of a vane 11 as that vane approaches side 25 or 27, jamming against that side is substantially prevented owing to the latter's shape. Alternatively, the halves of side 25 could be convergent inwards towards its centre 26 and/or the halves of side 27 could be conversent inwards towards its centre 28.

Preferably, to substantially avoid material jamming against member 6, the vertical distance from the lowermost end 29 of the member 6 to the circumference of the rotary valve 4 (i.e. the circumference of either of discs 12) is about 1.5 times the particle size of material being handled by the arrangement.

To enable material from the throat to settle in a pocket between adjacent vanes 11 at its angle of repose before the tip of the leading one of the vanes reaches a potential chopping edge provided by side 25, the angle θ, between a radius from the centre 26 of side 25 to the axis of rotation of the axle 10 and the vertical, is in the range from 30° to 50°.

In Fig. 1, reference numeral 30 denotes a vent opening in the body 3. Preferably, there are always at least two of vanes 11 sealing against body 3 before the vent opening 3 and after opening 8; and always at least one of vanes 11 sealing against body 3 after vent opening 3 and before the throat in opening 5. This is to reduce the pressure and hence air velocity through opening 3 and to substantially prevent any material from the throat flowing to the opening 3. Similarly, there are always at least three of vanes 11 sealing against body 3 after the plate 24 and before the opening 8.

Referring to Figs. 1, 3 and 5, the body 3, at the top, is shaped so that on opposite sides of opening 5, it has inwardly sloping faces 32; and two vertical triangular faces 33 to accomodate pivotal movement of plate 7. The faces 32 terminate at shoulders 34 below which are voids 35 (see Fig. 5, in which only one of voids 35 is shown) to allow material to settle in the throat in opening 5.

In the above-described rotary valve arrangement, by virtue of arrangements 13/15 and 23/24 and the shapes of sides 25 and 27, degradation of granular or particulate material at the edges of sides 25 and 27 is substantially prevented.

Instead of being offset, the openings 5 and 8 could be in-line.

## Claims

1. A rotary valve arrangement comprising a rotary valve (4) for handling granular or particulate material, the rotary valve comprising a plurality of rotatable vanes (11), to which valve such material is fed from above in use of the valve, and an inlet arrangement for the rotary valve, the inlet arrangement comprising resilient means (13, 15, 17) disposed with at least a majority of it above the vanes in use of the arrangement for at least partially removing such material from the tips of the vanes, characterised in that said inlet arrangement comprises further resilient means (23, 24, 17) downstream of the first resilient means in the direction of rotation of the vanes in use of the arrangement for substantially removing any such material which remains on the tips of the vanes or has been deflected off the vanes away from the latter, said further resilient means comprising an elongate member (23) whose axis is parallel to the axis of rotation of said vanes, a plate (24) running lengthwise of and attached to said elongate member and spring means (17), said elongate member being resiliently mounted about its axis via said spring means.

2. A rotary valve arrangement according to claim 1, characterised in that said spring means comprises a respective coil spring (17) around at least one end of the elongate member (23) of the further resilient means.

3. A rotary valve arrangement according to claim 2, characterised in that the or each coil spring (17) has a transverse leg received in a notch in the end face of the respective end of said elongate member (23), the coil spring and the respective end of the elongate member being held by retaining means (14).

4. A rotary valve arrangement according to any preceding claim, characterised in that said first resilient means (13, 15, 17) comprises an elongate member (13) whose axis is parallel to the axis of rotation of said vanes (11), a plate (15) running lengthwise of and attached to said elongate member of the first resilient means and spring means (17), said elongate member of the first resilient means being resiliently mounted about its axis via said spring means of the first resilient means.

5. A rotary valve arrangement according to claim 4, characterised in that said spring means of the first resilient means (13, 15, 17) comprises a respective coil spring (17) around at least one end of the elongate member (13) of the first resilient means.

6. A rotary valve arrangement according to claim 5, characterised in that the or each coil spring (17) of the first resilient means (13, 15, 17) has a transverse leg (18) received in a notch (16) in the end face of the respective end of said elongate member (13) of the first resilient means, the coil spring and the respective end of this elongate member being held by retaining means (14).

7. A rotary valve arrangement according to any preceding claim, characterised in that the spaces between the vanes (11) are closed at opposite ends by discs (12) which are transverse the axis of rotation of the vanes, there being received between each of the discs and a housing (3, 31) of the rotary valve (4) a respective sealing ring (21), a chamfered edge of which is urged against a chamfered edge of the respective disc by a ring (22) of resilient material received between the sealing ring and the housing.

## Patentansprüche

1. Rotationsschleusenanordnung mit einer Rotationsschleuse (4) zum Handhaben von granularem oder teilchenförmigem Material, wobei die Rotationsschleuse eine Anzahl von drehbaren Flügelblättern (11) enthält, der Schleuse bei ihrer Verwendung derartiges Material von oben zugeführt wird, und mit einer eine wenigstens größtenteils bei der Verwendung der Anordnung über den Flügelblättern angeordnete federnde Einrichtung (13, 15, 17) enthaltenden Einlaßanordnung für die Rotationsschleuse, um zumindest teilweise derartiges Material von den Spitzen der Flügelblätter zu entfernen, dadurch gekennzeichnet, daß die Einlaßanordnung eine bei der Verwendung der Anordnung in Drehrichtung der Flügelblätter stromabwärts der ersten federnden Anordnung angebrachte weitere federnde Einrichtung (23, 24, 17) aufweist, um im wesentlichen jedes auf den Spitzen der Flügelblätter verbliebene oder von den Flügelblättern weg von den letzteren fort abgelenkte Material zu entfernen, wobei die weitere federnde Einrichtung ein langgestrecktes Element (23) aufweist, dessen Achse parallel ist zur Drehachse der Flügelblätter, eine in Längsrichtung des langgestreckten Elements verlaufende und and diesem befestigte Platte (24) und eine Federvorrichtung (17), mittels derer das langgestreckte Element um seine Achse herum federnd angeordnet ist.

2. Rotationsschleusenanordnung nach Anspruch 1, dadurch gekennzeichnet, daß die Federvorrichtung eine um mindestens ein Ende des langgestreckten Elements (23) der weiteren federnden Einrichtung angeordnete jeweilige Spiralfeder (17) enthält.

3. Rotationsschleusenanordnung nach Anspruch 2, dadurch gekennzeichnet, daß die bzw. jede Spiralfeder (17) einen Querschenkel aufweist, der in einer Nut in der Endfläche des jeweiligen Endes des langgestreckten Elements (23) aufgenommen ist, wobei die Spiralfeder und das jeweilige Ende des langgestreckten Elements von einer Halterungsvorrichtung (14) gehalten werden.

4. Rotationsschleusenanordnung nach einem der vorhergehenden Ansprüche, dadurch gekennzeichnet, daß die erste federnde Einrichtung (13, 15, 17) ein langgestrecktes Element (13) enthält, dessen Achse parallel ist zur Drehachse der Flügelblätter (11), eine längs dem langgestreckten Element der ersten federnden Einrichtung verlaufende und an diesem befestigte Platte (15) und eine Federvorrichtung (17), mittels derer das langgestreckte Element der ersten federnden Einrichtung um seine Achse herum federnd angeordnet ist.

5. Rotationsschleusenanordnung nach Anspruch 4, dadurch gekennzeichnet, daß die Federvorrichtung der ersten federnden Einrichtung (13, 15, 17) um mindestens ein Ende des langgestreckten Elements (13) der ersten federnden Einrichtung eine jeweilige Spiralfeder (17) enthält.

6. Rotationsschleusenanordnung nach Anspruch 5, dadurch gekennzeichnet, daß die bzw. jede Spiralfeder (17) der ersten federnden Einrichtung (13, 15, 17) einen Querschenkel (18) aufweist, der in einer Nut (16) in der Endfläche des jeweiligen Endes des langgestreckten Elements (13) der ersten federnden Einrichtung aufgenommen ist, wobei die Spiralfeder und das jeweilige Ende dieses langgestreckten Elements von einer Halterungseinrichtung (14) gehalten sind.

7. Rotationsschleusenanordnung nach einem der vorhergehenden Ansprüche, dadurch gekennzeichnet, daß die Zwischenräume zwischen den Flügelblättern (11) an den gegenüberliegenden Enden mittels quer zur Drehachse der Flügelblätter angeordneter Scheiben (12) geschlossen sind, wobei zwischen jeder der Scheiben und einem Gehäuse (3, 31) der Rotationsschleuse (4) jeweils ein Abdichtungsring (21) aufgenommen ist, der eine abgeschrägte Kante aufweist, die mittels eines zwischen dem Abdichtungsring und dem Gehäuse aufgenommenen Rings (22) aus einem elastischen Material gegen eine abgeschrägte Kante der jeweiligen Scheibe gedrückt wird.

## Revendications

1. Dispositif à vanne rotative comprenant une vanne rotative (4) pour la manutention de matériau en granules ou en particules, la vanne rotative comprenant une pluralité d'aubes (11) tournantes et, en fonctionnement, étant alimentée en matériau par-dessus, et une entrée pour la vanne rotative, l'entrée comprenant des moyens élastiques (13, 15, 17) disposés, pour au moins la majorité d'entre eux, au-dessus des aubes lorsque le dispositif est en fonctionnement, de façon à retirer au moins partiellement le matériau des extrémités des aubes, caractérisé en ce que, dans l'entrée, la vanne comprend d'autres moyens élastiques (23, 24, 17) en aval des premiers moyens élastiques dans la direction de rotation des aubes lorsque le dispositif est en fonctionnement, afin de retirer significativement tout le matériau qui reste sur les extrémités des aubes ou qui en a été défléchi, les autres moyens élastiques comprenant un organe allongé (23) dont l'axe est parallèle à l'axe de rotation des aubes, une plaque (24) courant sur la longueur de l'organe allongé et étant fixée à celui-ci, et des moyens de ressort (17), l'organe allongé étant monté de façon élastique autour de son axe par l'intermédiaire des moyens de ressort.

2. Dispositif à vanne rotative selon la revendication 1, caractérisé en ce que les moyens de ressort comprennent un ressort à boudin (17) respectif autour d'au moins une des extrémités de l'organe allongé (23) des autres moyens élastiques.

3. Dispositif à vanne rotative selon la revendication 2, caractérisé en ce que le ressort à boudin (17) ou chacun d'entre eux présentent une branche transversale qui se loge dans une encoche ménagée dans la face terminale de l'extrémité respective de l'organe allongé (23), le ressort à boudin et l'extrémité respective de l'organe allongé étant tenus par des moyens de maintien (14).

4. Dispositif à vanne rotative selon l'une des revendications précédentes, caractérisé en ce que les premiers moyens élastiques (13, 15, 17) comprennent un organe allongé (13) dont l'axe est parallèle à l'axe de rotation des aubes (11), une plaque (15) courant sur la longueur de l'organe allongé des premiers moyens élastiques et étant attachée à celui-ci, et des moyens de ressort (17), l'organe allongé des premiers moyens élastiques étant monté de façon élastique autour de son axe par l'intermédiaire des moyens de ressort des premiers moyens élastiques.

5. Dispositif à vanne rotative selon la revendication 4, caractérisé en ce que les moyens de ressort des premiers moyens élastiques (13, 15, 17) comprennent un ressort à boudin respectif (17) autour d'au moins une des extrémités de l'organe allongé (13) des premiers moyens élastiques.

6. Dispositif à vanne rotative selon la revendication 5, caractérisé en ce que le ressort à boudin (17) des premiers moyens élastiques (13, 15, 17) présentent branche transversale qui se loge dans une encoche (16) ménagée dans la face terminale de l'extrémité respective de l'organe allongé (13) des premiers moyens élastiques, le ressort à boudin et l'extrémité respective de l'organe allongé étant tenus par des moyens de maintien (14).

7. Dispositif à vanne rotative selon l'une des revendications précédentes, caractérisé en ce que les espaces entres les aubes (11) sont fermés aux extrémités opposées par des disques (12) qui sont transversaux par rapport à l'axe de rotation des aubes, qu'ainsi se trouve logé entre chaque disque et le carter (3, 31) de la vanne rotative (4) un joint d'étanchéité (21) respectif, dont le bord chanfreiné est pressé contre le bord chanfreiné du disque respectif par un anneau (22) en matériau élastique qui se loge entre le joint d'étanchéité et le carter.

FIG. 1.

Fig. 2a)

Fig. 2b)

32    5
33    25    α    α
3    33    26
3

Fig.3

32

8    3
β
28    27
β

Fig.4

Fig.5